# EUROPEAN PATENT SPECIFICATION

(11) **EP 3 373 405 B1**
(45) Date of publication and mention of the grant of the patent: **10.07.2019**
(21) Application number: 18159161.1
(22) Date of filing: 28.02.2018
(51) Int. Cl.: H02J 3/14, G05B 15/02

(54) **METHOD FOR CONTROLLING A LOAD OF AN ELECTRICITY DISTRIBUTION NETWORK**
VERFAHREN ZUR STEUERUNG EINER LAST EINES STROMVERTEILUNGSNETZES
PROCÉDÉ POUR COMMANDER UN CONSOMMATEUR D'UN RÉSEAU DE DISTRIBUTION ÉLECTRIQUE

(30) Priority: 08.03.2017 FI 20175213
(43) Date of publication of application: 12.09.2018
(73) Proprietor: OptiWatti Oy, 02240 Espoo (FI)
(72) Inventor: Marjeta, Juha, 02780 Espoo (FI)
(74) Representative: Suominen, Kaisa Liisa

(56) References cited:
- WO-A1-2009/023229
- WO-A1-2014/089459
- US-A1- 2015 308 703

## Description

### TECHNICAL FIELD

The present disclosure relates generally to electricity distribution, and more specifically, to a method for controlling a load of an electricity distribution network.

### BACKGROUND

An electrical grid is an interconnected electrical network for delivering electricity from suppliers to consumers. The electrical network may include generating stations that produce electrical power, high-voltage transmission lines that carry power from distant sources to demand centres, and distribution lines that connect individual customers. The electrical network may use storage from electrical utilities (e.g. electric heaters) during peak times and then replenish it during off peak times. Load balancing refers to the use of various techniques by electrical power stations to store excess electrical power during low demand periods for release as demand rises.

Existing power load management systems in the electrical network control the power supply of those loads according to tariff conditions. The power load management system may typically include a control relay. A control key is designed to control an external power relay for automatically controlling the operation of the electric utilities according to the tariff status. One well-known case of power load management is the control of the operation of an electric heater according to off-peak rates or peak rates.

Sometimes, the electrical networks may tend to collapse due to improper load balancing. Possible causes of the electrical network to collapse may be excess usage of load in the electrical network (i.e. frequency starts to decrease from 50 Hz to 49.9 Hz to 49.8 Hz etc.) or little usage of load in the electrical network (i.e. frequency starts to increase from 50 Hz to 50.1 Hz to 50.2 Hz etc.). Further, the modern electrical networks are becoming increasingly complex as they include an increasing proportion of variable production. Infrastructures are close to saturation due to constantly growing needs.

Document WO 2012/140529 discloses a method of load adjustment sharing for a space including a first zone and a second zone as well as a control unit. The method comprises the steps of receiving information related to a load adjustment for the space, and receiving environment information about the first zone and the second zone. Based on this environment information, and information related to the load adjustment, load adjustment shares for the zones are determined.

Document US 2015/0308703 A1 discloses an integrated demand control method for air conditioners disposed in a plurality of areas.

Therefore, in light of the foregoing discussion, there exists a need to overcome the aforementioned drawbacks in existing methods and systems due to excess or less usage of load in the electricity distribution network and for avoiding the risk of failure of the electricity distribution network which could even lead to blackouts in entire regions.

### SUMMARY

The present disclosure provides a method for controlling a load of an electricity distribution network, wherein a plurality of houses are connected to the electricity distribution network and each house comprises a home automation system and at least one room, the method comprising steps of
- forming a first group of rooms and a second group of rooms;
- allocating a first control time period for the first group of rooms and a second control time period for the second group of rooms;
- receiving measured room temperatures and desired room temperatures of the rooms of the first group and of the rooms of the second group;
- receiving an indication to modify the load of the electricity distribution network;
- making a first timing plan to increase or decrease heating using electrical heaters or to increase or decrease cooling using electrical coolers in the first group of rooms and a second timing plan to increase or decrease heating using electrical heaters or to increase or decrease cooling using electrical coolers in the second group of rooms, based on the measured room temperatures and desired room temperatures, prior to:
- receiving an indication to modify the load of the electricity distribution network; and
- adjusting the first timing plan if the indication to modify the load is received in the first control time period and adjusting the second timing plan if the indication to modify the load is received in the second control time period, such that
   - if the indication is to increase the load, adjusting the timing plan by decreasing the electricity consumption of at least one electrical heater or cooler later than in the timing plan, or increasing the electricity consumption of the at least one electrical heater or cooler earlier than in the timing plan; and
   - if the indication is to decrease the load, adjusting the timing plan by increasing the electricity consumption of the at least one electrical heater or cooler later than in the timing plan, or decreasing the electricity consumption of the at least one electrical heater or cooler earlier than in the timing plan.

Embodiments of the present disclosure substantially eliminate or at least partially address the aforementioned problems in the prior art due to excess or less usage of load in the electricity distribution network, which could even lead to blackouts in entire regions.

Additional aspects, advantages, features and objects of the present disclosure are made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of an electricity distribution network in accordance with an embodiment of the present disclosure;
FIG. 2 is a schematic illustration of an electricity distribution network that is connected to a house in accordance with an embodiment of the present disclosure;
FIG. 3 is an exemplary table view that shows an unbalanced timing plan for a first group of rooms in accordance with an embodiment of the present disclosure;
FIG. 4 is an exemplary table view that shows an optimum timing plan for a first group of rooms in accordance with an embodiment of the present disclosure; and
FIG. 5 is an exemplary table view that shows a desired timing plan for a second group of rooms in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible. For examples, embodiments may be created using software, or using a FPGA(s), or by using an ASIC(s).

The present disclosure provides a method for controlling a load of an electricity distribution network, wherein a plurality of houses are connected to the electricity distribution network and each house comprises a home automation system and at least one room, the method comprising steps of
- forming a first group of rooms and a second group of rooms;
- allocating a first control time period for the first group of rooms and a second control time period for the second group of rooms;
- receiving measured room temperatures and desired room temperatures of the rooms of the first group and of the rooms of the second group;
- receiving an indication to modify the load of the electricity distribution network;
- making a first timing plan to increase or decrease heating using electrical heaters or to increase or decrease cooling using electrical coolers in the first group of rooms and a second timing plan to increase or decrease heating using electrical heaters or to increase or decrease cooling using electrical coolers in the second group of rooms, based on the measured room temperatures and desired room temperatures, prior to:
- receiving an indication to modify the load of the electricity distribution network; and
- adjusting the first timing plan if the indication to modify the load is received in the first control time period and adjusting the second timing plan if the indication to modify the load is received in the second control time period, such that
   - if the indication is to increase the load, adjusting the timing plan by decreasing the electricity consumption of at least one electrical heater or cooler later than in the timing plan, or increasing the electricity consumption of the at least one electrical heater or cooler earlier than in the timing plan; and
   - if the indication is to decrease the load, adjusting the timing plan by increasing the electricity consumption of the at least one electrical heater or cooler later than in the timing plan, or decreasing the electricity consumption of the at least one electrical heater or cooler earlier than in the timing plan.

The present method thus autonomously controls the load of the electricity distribution network. The method effectively controls heat capacity inside the house by increasing and decreasing the electricity consumption of the electrical heater or coolers, based on the timing plan. Depending on the type of electrical heater and coolers, this can be carried out by turning ON and turning OFF the electrical heaters or coolers, or it may be carried out by amending the temperature set as target for heating and/or cooling (for example when air-to-air heat pumps are used). The method further enhances the load balancing and usage of load in the electricity distribution network. The method further eliminates human intervention to control the load of the electricity distribution network and to control the heat capacity inside the house. The method thus enables room level control of the electrical heaters or coolers to have an impact on a total peak power consumption of a house and thus to entire electricity distribution network. A major advantage of the present method is that users (i.e. inhabitants and users of the houses) will not suffer from cold or heat, i.e. they will most probably not even notice that the method is being carried out ant the load of the electricity distribution network balanced and controlled.

In the present description, by house are meant all kinds of premises, such as individual homes and buildings, apartment buildings (where each house may be considered as one apartment or as the whole building), industrial buildings, shops, malls etc.

According to an embodiment, decreasing the electricity consumption of at least one electrical heater or cooler is carried out by turning the heater or cooler OFF, by decreasing the heating temperature of the heater or by increasing the cooling temperature of the cooler. Similarly, increasing the electricity consumption of at least one electrical heater or cooler is carried out by turning the heater or cooler ON, by increasing the heating temperature of the heater or by decreasing the cooling temperature of the cooler. By increasing the heating temperature of the heater, it is meant increasing the set target heating temperature of the heater, i.e. that the heater heats more than it is set to heat, and by increasing the cooling temperature of the cooler, it is meant that the set cooling temperature is increased, i.e. the cooler is cooling to a higher temperature than it is set to cool, that is, it is cooling less.

Indeed, according to an embodiment, making a first timing plan to increase or decrease heating using electrical heaters or to increase or decrease cooling using electrical coolers in the first group of rooms and a second timing plan to increase or decrease heating using electrical heaters or to increase or decrease cooling using electrical coolers in the second group of rooms, based on the measured room temperatures and desired room temperatures may be carried out by making a first timing plan to turn ON or OFF electrical heaters or coolers in the first group of rooms and a second timing plan to turn ON or OFF electrical heaters or coolers in the second group of rooms, based on the measured room temperatures and desired room temperatures. In the following description, for sake of conciseness, it is referred to turning the heaters or coolers ON or OFF, but it is to be understood that turning a heater or cooler ON means increasing its electricity consumption and turning a heater or cooler OFF means decreasing its electricity consumption, even if this is not specified at each instance. Thus the embodiments listed below apply equally to the situation where the cooling or heating temperature is adjusted instead of turning the device ON or OFF, even if not specified.

Furthermore, if the indication is to increase the load, adjusting the timing plan by decreasing the electricity consumption of at least one electrical heater or cooler later than in the timing plan, or increasing the electricity consumption of the at least one electrical heater or cooler earlier than in the timing plan may be carried out by turning OFF at least one electrical heater or cooler later than in the timing plan, or turning ON at least one electrical heater or cooler earlier than in the timing plan. Likewise, if the indication is to decrease the load, adjusting the timing plan by increasing the electricity consumption of the at least one electrical heater or cooler later than in the timing plan, or decreasing the electricity consumption of the at least one electrical heater or cooler earlier than in the timing plan, this can be carried out by adjusting the timing plan by turning ON at least one electrical heater or cooler later than in the timing plan, or turning OFF at least one electrical heater or cooler earlier than in the timing plan.

In an embodiment, each house comprises more than one home automation system. The home automation system may be installed at any portion inside the house or outside the house. In an embodiment, each house comprises more than one rooms. Each room of the house comprises at least one electrical heater or cooler, or at least a majority of the rooms of the house comprise at least one electrical heater or cooler. The at least one electrical heater or cooler may be controlled using the home automation system. The electrical heaters may be a space heater, a radiant heater, a convection heater, a fan heater, a heat pump, a radiator, a boiler, a furnace, a convector etc. The same applies to coolers, as various types of electrical coolers may be used.

In an embodiment, each room of the house further comprises at least one temperature sensor, or at least each room equipped with a heater or a cooler comprises a temperature sensor. The at least one temperature sensor may be placed in proximity to the at least one electrical heater or cooler. In an embodiment, the at least one temperature sensor measures room temperatures and desired room temperatures of the rooms of the first group and of the second group. The home automation system may receive the measured room temperatures from the at least one sensor.

The home automation system may be communicatively connected to a server though a communication network. The communication network may be a Bluetooth, a wireless-fidelity (Wi-Fi), a wired network, an infrared communication network etc. The server may program the home automation system to control the load or electricity usage of the house. In an embodiment, the server may configure to perform one or more steps of the home automation system to control the load or electricity usage of the house. The server may be a tablet, a desktop, a smart phone, a personal computer, an electronic notebook, a mobile communication device, an augmented reality device or a virtual reality device.

The home automation system may receive instructions to turn ON or turn OFF and timing plans (e.g. the first timing plan, the second timing plan, etc.) from the server through the communication network. The first timing plan to turn ON or turn OFF the electrical heaters or coolers in the first group of rooms may be same for a set of houses. Similarly, the second timing plan to turn ON or turn OFF the electrical heaters or coolers in the second group of rooms may be same for another set of houses. In one embodiment, the first control time period is same for a first set of houses and the first timing plan to turn ON or turn OFF the electrical heaters or coolers is same and within in the first control time period. Similarly, the second control time period is same for a second set of houses and the second timing plan to turn ON or turn OFF the electrical heaters or coolers is same and within the second control time period. By this way, each room of the house which needs to be controlled within the first timing plan or the second timing plan may generate load on the electricity distribution network substantially at the same time. Therefore, turning ON and OFF the electrical heaters or coolers at the same time needs to be synchronized.

According to an embodiment, the method further comprises measuring a frequency in the electricity distribution network. The frequency may be measured from each house, any electrical output of the electricity distribution network, transformers etc. The server may comprise real time information related to the frequency of the electricity distribution network. The frequency of the electricity distribution network may be measured from one or more measurement points. Each of the plurality of houses may comprise one or more measurement points with the home automation system. In an embodiment, the server comprises the one or more measurement points if the server is located in the same electricity distribution network. The information related to the frequency may be obtained from the one or more measurement points if the server is located in different electricity distribution network or in other country or continent. The transformers may be used to convert higher voltage to lower voltage for end user to use it or to convert voltage from at least one power plant to higher voltage.

In an embodiment, the electricity distribution network may connect the plurality of the houses together for effectively controlling the electricity in grid level. For example, an amount of electrical power consumed may be 1000 Watts (e.g. a normal output power of an electrical heater) if a single room consumes electrical power. For one million (1M) households, 1 GIGA Watt (1 GWatt) load balancing electrical power may be generated. In an embodiment, usage patterns of the electrical heaters or coolers may vary for each house and each room of the house to obtain overall load balancing in the electricity distribution network. For example, the home automation system may turn ON or OFF the electrical heater or cooler in a house by ± 5 minutes, ± 15 minutes or even ± 1 hour based on the heat capacity of the house and each room of the house. This may be used to determine load balancing of the electricity distribution network. In an embodiment, a heat level increases in each room and/or the house as function of the electrical heater is determined. This determined heat level of each room and/or the house may be used to determine how much heating can be advanced or delayed. The electrical heater of each house or each room is turned ON when more heating capacity (i.e. use of electricity) is needed for the plurality of houses at the same time. In another embodiment, a heat level decreases in each room and/or the house as function of an outdoor temperature and a current indoor temperature is determined. This determined heat level may be used to determine how much off-heating can be advanced or delayed. The electrical heater of each house or each room is turned OFF when less heating capacity (i.e. less electricity use) is needed for the plurality of houses at the same time.

In case the heaters are replaced by coolers, it is evident that the system functions in similar manner, i.e. turning coolers ON when more cooling capacity is needed.

According to another embodiment, the method further comprises generating the indication to modify the load by comparing the measured frequency with a nominal frequency of the electricity distribution network, wherein the indication is to increase the load if the nominal frequency is higher than the measured frequency and the indication is to decrease the load if the nominal frequency is lower than the measured frequency. In an embodiment, the frequency in the entire electricity distribution network is same. The nominal frequency may be 50 Hertz (Hz). The load may be due to electricity consumption of electrical appliances such as a television, a refrigerator, an electric fan etc. and a segment in the electricity distribution network etc. In an embodiment, the load of the electricity distribution network may increase when the nominal frequency is higher than the measured frequency. In another embodiment, the load of the electricity distribution network may decrease when the nominal frequency is lower than the measured frequency. Electricity may be produced and transmitted to the electricity distribution network by a plurality of power plants (e.g. a nuclear power plant, an industrial power plant, a coal power plant, a hydro-electric power plant etc.). The plurality of power plants may be connected to a transmission grid and a distribution grid. In one embodiment, the plurality of power plants are in same phase and in a frequency. The frequency of the electricity distribution network, for example, is 50 Hz and/or 60 Hz. In one embodiment, the frequency of the electricity distribution network decreases when the load in comparison to electricity produced is redundant in the electricity distribution network. In another embodiment, the frequency of the electricity distribution network increases when the electricity produced in comparison to the load is redundant in the electricity distribution network.

According to yet another embodiment, the first group of rooms is selected from a first group of houses and a second group of rooms is selected from a second group of houses. For example, the first group of houses may be in an electricity distribution network of the same city. The second group of houses, for example, may be in the electricity distribution network of another city. The plurality of houses may comprise a third group of houses which are in the electricity distribution network of rural area.

According to yet another embodiment, a moment of time for decreasing the electricity consumption of at least one electrical heater or cooler later than in the timing plan is substantially same for each of the rooms of the group of rooms. The moment of time for decreasing the electricity consumption of the at least one electrical heater or cooler later than in the timing plan may be substantially same for a set of houses.

According to yet another embodiment, a moment of time for decreasing the electricity consumption of at least one electrical heater or cooler earlier than in the timing plan is substantially same for each of the rooms of the group of rooms. The moment of time for decreasing the electricity consumption of the at least one electrical heater or cooler earlier than in the timing plan may be substantially same for a set of houses.

According to yet another embodiment, a moment of time for increasing the electricity consumption of at least one electrical heater or cooler earlier than in the timing plan is substantially same for each of the rooms of the group of rooms. The moment of time for increasing the electricity consumption of the at least one electrical heater or cooler earlier than in the timing plan may be substantially same for a set of houses. According to another embodiment, a moment of time for increasing the electricity consumption of at least one electrical heater or cooler later than in the timing plan is substantially same for each of the rooms of the group of rooms. The moment of time for increasing the electricity consumption of the at least one electrical heater or cooler later than in the timing plan is substantially same for a set of houses.

According to yet another embodiment, the first group of rooms is used for increasing the load and the second group of rooms is used for decreasing the load. According to yet another embodiment, a first room of a first house is allocated to the first group and a second room of the first house is allocated to the second group.

In one embodiment, a first room of the first house and the second room of the first house are allocated to the first group and the second group respectively based on round robin type or in a random way. By this method, the load balancing based turn OFF and ON the electrical heaters or coolers is evenly distributed within the house. If all turning OFF and ON are performed on a single electrical heater or cooler, a usage of a relay that controls the electrical heater or cooler increases which may lead to breaking of the relay. Further, switching ON and OFF the relay may cause noise.

According to yet another embodiment, the method further comprises determining a total amount of increase or decrease of load in the electricity distribution network, based on adjusted timing plans and power consumption of the time-adjusted electrical heaters or coolers. The server or the home automation system may determine information related to the total amount of increase or decrease of load in the electricity distribution network, based on adjusted timing plans and power consumption of the time-adjusted electrical heaters or coolers. This information may be used to invoice an electric grid company for reducing or adding load to the electric distribution network. This information may be used to send a signal to turn ON or OFF at least one power plant in the electricity distribution network. For example, based on prediction of turning OFF 1000 electrical heaters or coolers, the electricity distribution network or grid may save 1000 W and may shut down electricity production of 1 MEGA Watt (MW). Alternatively, the electricity distribution network or grid may save 1000 W and may need an extra capacity of 1 MEGA Watt (MW) if the 1000 electrical heaters or coolers are turned OFF.

According to yet another embodiment, the method thus further comprises using the determined total amount of power to turn ON or OFF at least one power plant of the electricity distribution network.

A typical server usable in the present description comprises a processor, a memory, a plurality of buses, a power supply, an external bus interface, a communication interface, an Universal Serial Bus Interface (USB), an application program interface, an Ethernet, a High Definition Multimedia interface (HDMI) and a graphics processor. The processor and the memory are configurable to store data. The memory may be configured as on-board memory of the processor or in other forms can also include expandable memory such as DDR memory, Flash Memory, EPROM, ROM, or various other forms or any combination thereof generally illustrated as the memory.

The plurality of buses may be configured to couple data and signals to various components within the server. The server may also include a single bus, multiple buses or any combination thereof. Indeed, various types of bus configurations may be used as needed or desired including, but not limited to, any combination or portion of a serial bus, a parallel bus, a serial--parallel bus, a universal serial bus, industry standard bus, controller area network bus, a serial peripheral bus, a universal asynchronous receiver transmitter bus, a control bus, standard digital input output bus, inter integrated circuit or any combination thereof.

The server may also include the external bus interface, the communication interface and the application program interface or any combination thereof configurable to be coupled to the plurality of buses or any combination thereof. Any combination of interfaces may be configured in any combination of hardware, software, or firmware, and can include any combination or portion of a serial bus interface, a parallel bus interface, a serial--parallel bus interface, a universal serial bus interface, industry standard bus interface, controller area network bus interface, a serial peripheral interface, a universal asynchronous receiver transmitter interface, a control bus interface, standard digital input output interface or any combination thereof.

A power supply may capable of providing power to the server. The Power supply may be an internal power supply and in other forms can be provided external to the server.

The server may be configured to use any type or combination of wire line or wireless communication to manage energy use at a site, including, but not limited to, power-line communication, wire line communication, wireless communication, 2G, 3G, 4G or 5G cellular networks, Zigbee based communication, INSETEON based communication, X10 based communication, Z-Wave based communication, Worldwide Interoperability for Microwave Access (WiMAX) based communication, Bluetooth based communication, Wireless Fidelity based communication, 802.11-based communication, 802.15-based communication, 802.16-based communication, proprietary communication or any combination thereof.

The communication interface may be configured to enable access to communication device, the server and a wireless energy network. The communication interface may be configured to detect an outgoing message formatted by the processor and configure the outgoing message to a message bus format that can be coupled to the bus and a communication device. For example, outgoing message can include network device data configured to be output to a wireless energy network, but processed into a message bus format prior to outputting to the communication device. The communication interface may then convert the outgoing message from a message bus format to a format that can be output by a specific communication device. The Universal Serial Bus interface (USB is a set of interface specifications for high speed wired communication between electronics systems peripherals and devices with or without PC/server. The ethernet is configured to connect multiple computers to a cable, thereby forming a bus structure.

Embodiments of the present disclosure may be used to autonomously control a load of an electricity network that are connected to the plurality of houses and a usage of the load by adjusting a timing plan of a group of rooms. The embodiments of the present disclosure may eliminate human intervention to control the load of the electricity distribution network and to control the heat capacity inside the house. The embodiments of the present disclosure may evenly distribute and control turn ON and turn OFF the electrical heaters or coolers within a house. Further, the embodiments of the present disclosure may eliminate a risk of failure of the electricity distribution network which could even lead to the blackout of entire regions.

### DETAILED DESCRIPTION OF THE DRAWINGS

In the description of the drawings, the present disclosure is illustrated by reference to electrical heaters for sake of conciseness.

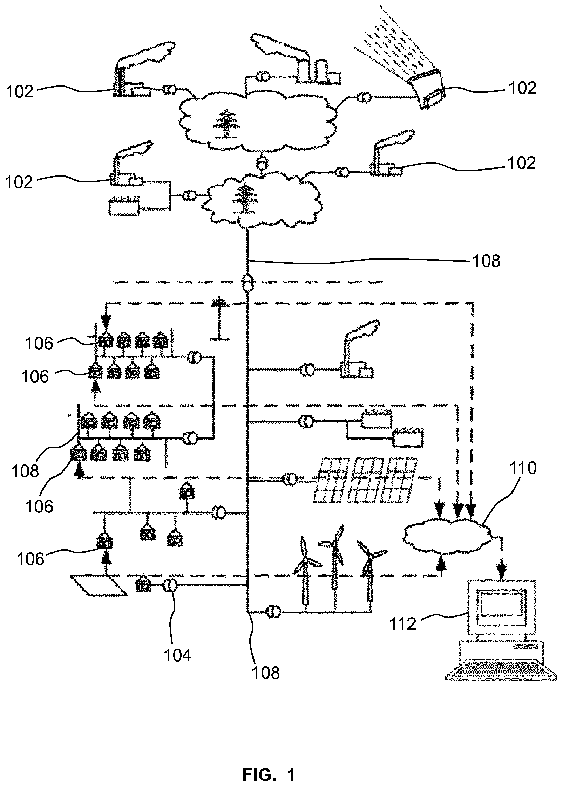

FIG. 1 is a schematic illustration of an electricity distribution network in accordance with an embodiment of the present disclosure. The electricity distribution network comprises at least one power plant **102,** transformers **104,** a home automation system **106** that is implemented in a plurality of houses, measurement points **108,** a communication network **110** and a server **112.** The functions of these parts as have been described above.

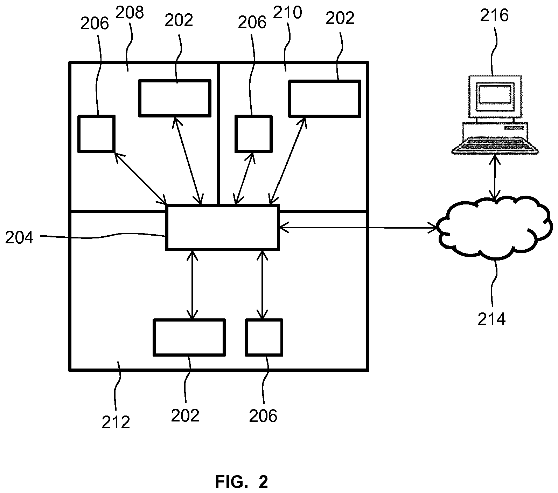

FIG. 2 is a schematic illustration of an electricity distribution network that is connected to a house in accordance with an embodiment of the present disclosure. The house comprises a home automation system **204** and at least one room **208, 210, 212.** Each room **208, 210, 212** of the house comprises at least one electrical heater **202** and at least one sensor **206.** The electricity distribution network comprises a communication network **214** and a server **216.** The home automation system **204** is communicatively connected to the server **216** through the communication network **214.**

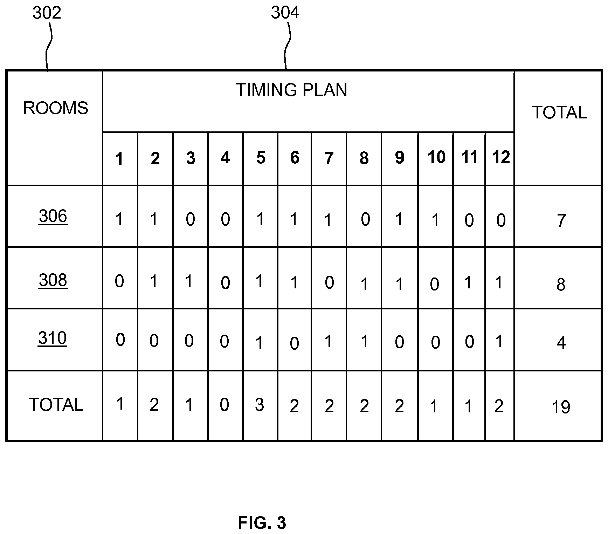

FIG. 3 is an exemplary table view that shows an unbalanced timing plan for a first group of rooms in accordance with an embodiment of the present disclosure. The exemplary table view comprises a rooms field **302** and a timing plan field **304.** The rooms field **302** comprises a first group of rooms **306, 308, 310.** The timing plan field **304** comprises a timing plan for the first group of rooms **306, 308, 310.** The exemplary table view shows that each of the first group of the rooms **306, 308, 310** are autonomic. The number 0 indicates that electrical heaters in the first group of the rooms **306, 308, 310** are turned OFF and the number 1 indicates that the electrical heaters in the first group of the rooms **306, 308, 310** are turned ON at specific moment of times (e.g. 1, 2, 3, 4, 5, 6, 7, 8, 9, 10, 11, 12) in the timing plan. Total indicates total electricity consumption of the first group of the rooms on each specific moment of time in the timing plan. The exemplary table view depicts that a temperature of the room **306** decreases as the electrical heaters are turned OFF during the third moment of time (i.e. moment of time of 3). The exemplary table view further depicts a temperature of the room **310** decreases as the electrical heaters are turned OFF during the moment of time of 1, 2 and 3 (i.e. a first moment of time, a second moment of time, and a third moment of time). The exemplary table view depicts that the electrical heaters of the first group of rooms **306, 308, 310** are turned ON during the moment of time of 5 (i.e. fifth moment of time), which results in increased load on an electricity distribution network during the fifth moment of time.

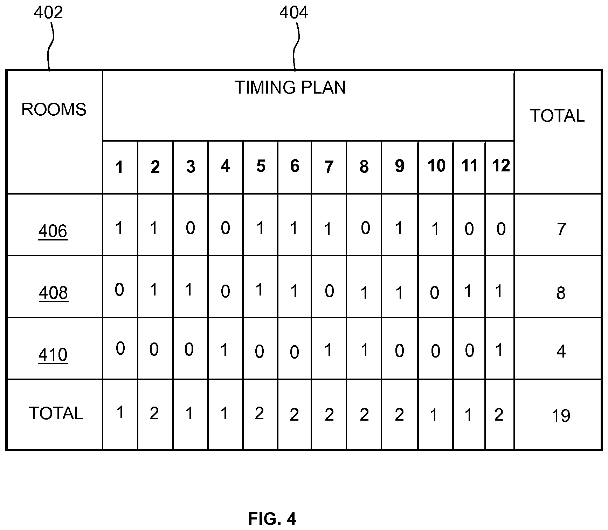

FIG. 4 is an exemplary table view that shows an optimum timing plan for a first group of rooms in accordance with an embodiment of the present disclosure. The exemplary table view comprises a rooms field **402** and a timing plan field **404.** The rooms field **402** comprises a first group of rooms **406, 408, 410.** The timing plan field **404** comprises a timing plan for the first group of rooms **406, 408, 410.** The number 0 indicates that electrical heaters are turned OFF and the number 1 indicates that the electrical heaters are turned ON at specific moment of times (e.g. 1, 2, 3, 4, 5, 6, 7, 8, 9, 10, 11, 12) in the timing plan. The exemplary table view depicts that the electrical heaters of the room **410** are turned ON during the moment of time of 4 (i.e. fourth moment of time), instead of during a moment of time of 5 (i.e. fifth moment of time) as shown in FIG. 3, in order to obtain optimum load balancing on an electricity distribution network. The exemplary table view depicts that a home automation system is automatically configured to limit a number of electrical heaters that consumes electricity to 2 to obtain the optimum load balancing on the electricity distribution network.

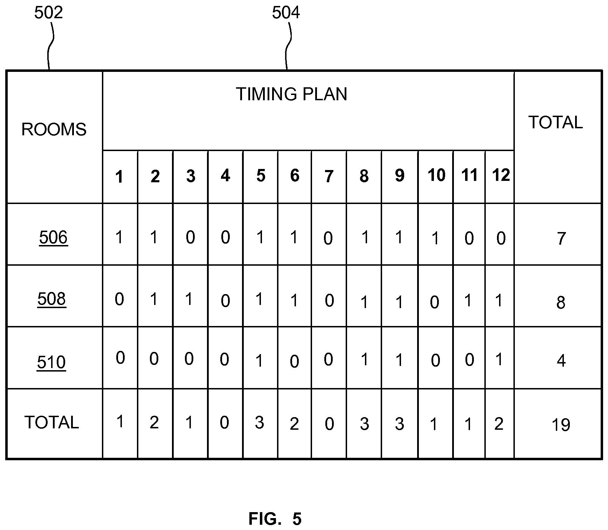

FIG. 5 is an exemplary table view that shows a desired timing plan for a second group of rooms in accordance with an embodiment of the present disclosure. The exemplary table view comprises a rooms field **502** and a timing plan field **504.** The rooms field **502** comprises a second group of rooms **506, 508, 510.** The timing plan field **504** comprises a timing plan for the second group of rooms **506, 508, 510.** The number 0 indicates that electrical heaters are turned OFF and the number 1 indicates that the electrical heaters are turned ON at specific moment of times (e.g. 1, 2, 3, 4, 5, 6, 7, 8, 9, 10, 11, 12) in the timing plan. The exemplary table view depicts that, for example, maximum usages of the electricity during the moment of time 8 and 9. The exemplary table view depicts that a home automation system postponed the heating of the room **506** by turn OFF electrical heaters of the room **506** during the moment of time of 7 and provides the heating during the moment of time of 8 by turn ON the electrical heaters of the room **506.** The exemplary table view further depicts that the home automation system postponed the heating of the room **510** by turn OFF electrical heaters of the room **510** during the moment of time of 7 and provides the heating during the moment of time of 9 by turn ON the electrical heaters of the room **510.**

Modifications to embodiments of the present disclosure described in the foregoing are possible without departing from the scope of the present disclosure as defined by the accompanying claims. Expressions such as including , comprising , incorporating , have , is used to describe and claim the present disclosure are intended to be construed in a non-exclusive manner, namely allowing for items, components or elements not explicitly described also to be present. Reference to the singular is also to be construed to relate to the plural.

## Claims

1. A method for controlling a load of an electricity distribution network, wherein a plurality of houses are connected to the electricity distribution network and each house comprises a home automation system (106, 204) and at least one room (208, 210, 212), the method comprising steps of
- forming a first group of rooms and a second group of rooms;
- allocating a first control time period for the first group of rooms and a second control time period for the second group of rooms;
- receiving measured room temperatures and desired room temperatures of the rooms of the first group and of the rooms of the second group;
- receiving an indication to modify the load of the electricity distribution network;
**characterised in that** the method also comprises
- making a first timing plan to increase or decrease heating using electrical heaters (202) or to increase or decrease cooling using electrical coolers in the first group of rooms and a second timing plan to increase or decrease heating using electrical heaters or to increase or decrease cooling using electrical coolers in the second group of rooms, based on the measured room temperatures and desired room temperatures, prior to receiving an indication to modify the load of the electricity distribution network; and
- adjusting the first timing plan if the indication to modify the load is received in the first control time period and adjusting the second timing plan if the indication to modify the load is received in the second control time period, such that
- if the indication is to increase the load, adjusting the timing plan by decreasing the electricity consumption of at least one electrical heater or cooler later than in the timing plan, or increasing the electricity consumption of the at least one electrical heater or cooler earlier than in the timing plan; and
- if the indication is to decrease the load, adjusting the timing plan by increasing the electricity consumption of the at least one electrical heater or cooler later than in the timing plan, or decreasing the electricity consumption of the at least one electrical heater or cooler earlier than in the timing plan.

2. A method according to claim 1, further comprising measuring a frequency in the electricity distribution network.

3. A method according to claim 2, further comprising generating the indication to modify the load by comparing the measured frequency with a nominal frequency of the electricity distribution network, wherein the indication is to increase the load if the nominal frequency is higher than the measured frequency and the indication is to decrease the load if the nominal frequency is lower than the measured frequency.

4. A method according to any of the preceding claims, wherein the first group of rooms is selected from a first group of houses and a second group of rooms is selected from a second group of houses.

5. A method according to any of the preceding claims, wherein decreasing the electricity consumption of at least one electrical heater or cooler is carried out by turning the heater or cooler OFF, by decreasing the heating temperature of the heater or by increasing the cooling temperature of the cooler and increasing the electricity consumption of at least one electrical heater or cooler is carried out by turning the heater or cooler ON, by increasing the heating temperature of the heater or by decreasing the cooling temperature of the cooler.

6. A method according to any of the preceding claims, wherein a moment of time for decreasing the electricity consumption of at least one electrical heater (202) or cooler later than in the timing plan is substantially same for each of the rooms of the group of rooms.

7. A method according to any of the preceding claims, wherein a moment of time for decreasing the electricity consumption of at least one electrical heater (202) or cooler earlier than in the timing plan is substantially same for each of the rooms of the group of rooms.

8. A method according to any of the preceding claims, wherein a moment of time for increasing the electricity consumption of at least one electrical heater (202) or cooler earlier than in the timing plan is substantially same for each of the rooms of the group of rooms.

9. A method according to any of the preceding claims, wherein a moment of time for increasing the electricity consumption of at least one electrical heater (202) or cooler later than in the timing plan is substantially same for each of the rooms of the group of rooms.

10. A method according to any of the preceding claims, wherein the first group of rooms is used for increasing the load and the second group of rooms is used for decreasing the load.

11. A method according to any of the preceding claims, wherein a first room of a first house is allocated to the first group and a second room of the first house is allocated to the second group.

12. A method according to any of the preceding claims, further comprising determining a total amount of increase or decrease of load in the electricity distribution network, based on adjusted timing plans and power consumption of the time-adjusted electrical heaters or coolers.

13. A method according to claim 12, further comprising using the determined total amount of power to turn ON or OFF at least one power plant (102) of the electricity distribution network.

## Patentansprüche

1. Verfahren zur Steuerung einer Last eines Stromverteilungsnetzes, wobei eine Mehrzahl von Häusern an das Stromverteilungsnetz angeschlossen sind und jedes Haus ein Heimautomatisierungssystem (106, 204) und mindestens einen Raum (208, 210, 212) umfasst, wobei das Verfahren die Schritte umfasst:
- Bilden einer ersten Gruppe von Räumen und einer zweiten Gruppe von Räumen;
- Zuordnen einer ersten Steuerzeitperiode zu der ersten Gruppe von Räumen und einer zweiten Steuerzeitperiode zu der zweiten Gruppe von Räumen;
- Empfangen von gemessenen Raumtemperaturen und erwünschten Raumtemperaturen der Räume der ersten Gruppe und der Räume der zweiten Gruppe;
- Empfangen einer Anzeige zur Modifikation der Last des Stromverteilungsnetzes;
**dadurch gekennzeichnet, dass** das Verfahren ferner umfasst:
- Aufstellen eines ersten Zeitplans zur Steigerung oder Verringerung eines Heizens unter Verwendung elektrischer Heizeinrichtungen (202) oder zur Steigerung oder Verringerung eines Kühlens unter Verwendung elektrischer Kühleinrichtungen in der ersten Gruppe von Räumen und eines zweiten Zeitplans zur Steigerung oder Verringerung eines Heizens unter Verwendung elektrischer Heizeinrichtungen oder zur Steigerung oder Verringerung eines Kühlens unter Verwendung elektrischer Kühleinrichtungen in der zweiten Gruppe von Räumen auf Grundlage der gemessenen Raumtemperaturen und der erwünschten Raumtemperaturen vor einem Empfangen einer Anzeige zur Modifikation der Last des Stromverteilungsnetzes; und
- Anpassen des ersten Zeitplans, wenn die Anzeige zur Modifikation der Last in der ersten Steuerzeitperiode empfangen wird und Anpassen des zweiten Zeitplans, wenn die Anzeige zur Modifikation der Last in der zweiten Steuerzeitperiode empfangen wird, derart, dass dann,
- wenn die Anzeige darin besteht, die Last zu steigern, der Zeitplan durch ein Verringern des Stromverbrauchs von mindestens einer elektrischen Heizeinrichtung oder Kühleinrichtung später als in dem Zeitplan vorgesehen oder durch ein Steigern des Stromverbrauchs der mindestens einen elektrischen Heizeinrichtung oder Kühleinrichtung früher als in dem Zeitplan vorgesehen angepasst wird; und
- wenn die Anzeige darin besteht, die Last zu verringern, der Zeitplan durch ein Steigern des Stromverbrauchs der mindestens einen elektrischen Heizeinrichtung oder Kühleinrichtung später als in dem Zeitplan vorgesehen oder durch ein Verringern des Stromverbrauchs der mindestens einen elektrischen Heizeinrichtung oder Kühleinrichtung früher als in dem Zeitplan vorgesehen angepasst wird.

2. Verfahren nach Anspruch 1, ferner umfassend ein Messen einer Frequenz in dem Stromverteilungsnetz.

3. Verfahren nach Anspruch 2, ferner umfassend Erzeugen der Anzeige zur Modifikation der Last durch ein Vergleichen der gemessenen Frequenz mit einer Nominalfrequenz des Stromverteilungsnetzes, wobei die Anzeige darin besteht, die Last zu steigern, wenn die Nominalfrequenz höher als die gemessene Frequenz ist, und die Anzeige darin besteht, die Last zu verringern, wenn die Nominalfrequenz niedriger als die gemessene Frequenz ist.

4. Verfahren nach einem der vorhergehenden Ansprüche, wobei die erste Gruppe von Räumen aus einer ersten Gruppe von Häusern gewählt wird und eine zweite Gruppe von Räumen aus einer zweiten Gruppe von Häusern gewählt wird.

5. Verfahren nach einem der vorhergehenden Ansprüche, wobei ein Verringern des Stromverbrauchs von mindestens einer elektrischen Heizeinrichtung oder Kühleinrichtung durch Ausschalten der Heizeinrichtung oder der Kühleinrichtung, durch ein Verringern der Heiztemperatur der Heizeinrichtung oder durch ein Steigern der Kühltemperatur der Kühleinrichtung ausgeführt wird, und ein Steigern des Stromverbrauchs von mindestens einer elektrischen Heizeinrichtung oder Kühleinrichtung durch Einschalten der Heizeinrichtung oder der Kühleinrichtung, durch ein Steigern der Heiztemperatur der Heizeinrichtung oder durch ein Verringern der Kühltemperatur der Kühleinrichtung ausgeführt wird.

6. Verfahren nach einem der vorhergehenden Ansprüche, wobei ein Zeitpunkt zum Verringern des Stromverbrauchs von mindestens einer elektrischen Heizeinrichtung (202) oder Kühleinrichtung später als in dem Zeitplan vorgesehen im Wesentlichen der gleiche für jeden der Räume der Gruppe von Räumen ist.

7. Verfahren nach einem der vorhergehenden Ansprüche, wobei ein Zeitpunkt zum Verringern des Stromverbrauchs von mindestens einer elektrischen Heizeinrichtung (202) oder Kühleinrichtung früher als in dem Zeitplan vorgesehen im Wesentlichen der gleiche für jeden der Räume der Gruppe von Räumen ist.

8. Verfahren nach einem der vorhergehenden Ansprüche, wobei ein Zeitpunkt zum Steigern des Stromverbrauchs von mindestens einer elektrischen Heizeinrichtung (202) oder Kühleinrichtung früher als in dem Zeitplan vorgesehen im Wesentlichen der gleiche für jeden der Räume der Gruppe von Räumen ist.

9. Verfahren nach einem der vorhergehenden Ansprüche, wobei ein Zeitpunkt zum Steigern des Stromverbrauchs von mindestens einer elektrischen Heizeinrichtung (202) oder Kühleinrichtung später als in dem Zeitplan vorgesehen im Wesentlichen der gleiche für jeden der Räume der Gruppe von Räumen ist.

10. Verfahren nach einem der vorhergehenden Ansprüche, wobei die erste Gruppe von Räumen zum Steigern der Last und die zweite Gruppe von Räumen zum Verringern der Last verwendet wird.

11. Verfahren nach einem der vorhergehenden Ansprüche, wobei ein erster Raum eines ersten Hauses der ersten Gruppe und ein zweiter Raum des ersten Hauses der zweiten Gruppe zugeordnet wird.

12. Verfahren nach einem der vorhergehenden Ansprüche, ferner umfassend Bestimmen eines Gesamtbetrags einer Steigerung oder einer Verringerung der Last in dem Stromverteilungsnetz auf Grundlage von angepassten Zeitplänen und eines Energieverbrauchs der zeitangepassten elektrischen Heizeinrichtungen oder Kühleinrichtungen.

13. Verfahren nach Anspruch 12, ferner umfassend Verwenden des bestimmten Gesamtbetrags von Energie, um mindestens ein Kraftwerk (102) des Stromverteilungsnetzes ein- oder auszuschalten.

## Revendications

1. Procédé permettant de réguler une charge d'un réseau de distribution d'électricité, dans lequel une pluralité de maisons est connectée au réseau de distribution d'électricité et chaque maison comprend un système domotique (106, 204) et au moins une pièce (208, 210, 212), le procédé comprenant les étapes
- de formation d'un premier groupe de pièces et d'un second groupe de pièces ;
- d'association d'un premier intervalle de temps de contrôle au premier groupe de pièces et d'un second intervalle de temps de contrôle au second groupe de pièces ;
- de réception des températures de pièces mesurées et des températures de pièces désirées des pièces du premier groupe et des pièces du second groupe ;
- de réception d'une indication pour modifier la charge du réseau de distribution d'électricité ;
**caractérisé en ce que** le procédé comprend également
- la réalisation d'une première planification dans le temps pour augmenter ou diminuer le chauffage en utilisant des radiateurs électriques (202) ou pour augmenter ou diminuer le rafraichissement en utilisant des refroidisseurs électriques dans le premier groupe de pièces et d'une seconde planification dans le temps pour augmenter ou diminuer le chauffage en utilisant des radiateurs électriques ou pour augmenter ou diminuer le rafraichissement en utilisant des refroidisseurs électriques dans le second groupe de pièces, sur la base des températures de pièces mesurées et des températures de pièces désirées, avant la réception d'une indication pour modifier la charge du réseau de distribution d'électricité ; et
- l'ajustement de la première planification dans le temps si l'indication pour modifier la charge est reçue dans le premier intervalle de temps de contrôle et l'ajustement de la seconde planification dans le temps si l'indication pour modifier la charge est reçue dans le second intervalle de temps de contrôle, de façon à
- si l'indication est d'augmenter la charge, ajuster la planification dans le temps en diminuant la consommation d'électricité d'au moins un radiateur ou refroidisseur électrique plus tard que dans la planification dans le temps, ou en augmentant la consommation d'électricité de l'au moins un radiateur ou refroidisseur électrique plus tôt que dans la planification dans le temps ; et
- si l'indication est de diminuer la charge, ajuster la planification dans le temps en augmentant la consommation d'électricité de l'au moins un radiateur ou refroidisseur électrique plus tard que dans la planification dans le temps, ou en diminuant la consommation d'électricité de l'au moins un radiateur ou refroidisseur électrique plus tôt que dans la planification dans le temps.

2. Procédé selon la revendication 1, comprenant en outre la mesure d'une fréquence du réseau de distribution d'électricité.

3. Procédé selon la revendication 2, comprenant en outre la génération de l'indication pour modifier la charge en comparant la fréquence mesurée avec une fréquence nominale du réseau de distribution d'électricité, où l'indication est d'augmenter la charge si la fréquence nominale est plus élevée que la fréquence mesurée et l'indication est de diminuer la charge si la fréquence nominale est plus faible que la fréquence mesurée.

4. Procédé selon l'une quelconque des revendications précédentes, dans lequel le premier groupe de pièces est choisi à partir d'un premier groupe de maisons et un second groupe de pièces est choisi à partir d'un second groupe de maisons.

5. Procédé selon l'une quelconque des revendications précédentes, dans lequel une diminution de la consommation d'électricité d'au moins un radiateur ou refroidisseur électrique est effectuée en arrêtant le radiateur ou le refroidisseur sur OFF, en diminuant la température de chauffage du radiateur ou en augmentant la température de rafraichissement du refroidisseur et l'augmentation de la consommation d'électricité d'au moins un radiateur ou refroidisseur électrique est effectuée en allumant le radiateur ou le refroidisseur sur ON, en augmentant la température de chauffage du radiateur ou en diminuant la température de rafraichissement du refroidisseur.

6. Procédé selon l'une quelconque des revendications précédentes, dans lequel un moment dans le temps pour diminuer la consommation d'électricité d'au moins un radiateur (202) ou un refroidisseur électrique plus tard que la planification dans le temps est essentiellement identique pour chacune des pièces du groupe de pièces.

7. Procédé selon l'une quelconque des revendications précédentes, dans lequel un moment dans le temps pour diminuer la consommation d'électricité d'au moins un radiateur (202) ou un refroidisseur électrique plus tôt que dans la planification dans le temps est essentiellement identique pour chacune des pièces du groupe de pièces.

8. Procédé selon l'une quelconque des revendications précédentes, dans lequel une heure pour augmenter la consommation d'électricité d'au moins un radiateur (202) ou un refroidisseur électrique plus tôt que dans la planification dans le temps est essentiellement identique pour chacune des pièces du groupe de pièces.

9. Procédé selon l'une quelconque des revendications précédentes, dans lequel une heure pour augmenter la consommation d'électricité d'au moins un radiateur (202) ou un refroidisseur électrique plus tard que dans la planification dans le temps est essentiellement identique pour chacune des pièces du groupe de pièces.

10. Procédé selon l'une quelconque des revendications précédentes, dans lequel le premier groupe de pièces est utilisé pour augmenter la charge et le second groupe de pièces est utilisé pour diminuer la charge.

11. Procédé selon l'une quelconque des revendications précédentes, dans lequel une première pièce d'une première maison est associée au premier groupe et une deuxième pièce de la première maison est associée au second groupe.

12. Procédé selon l'une quelconque des revendications précédentes, comprenant en outre la détermination d'une augmentation ou d'une diminution totale de charge dans le réseau de distribution d'électricité, sur la base des planifications dans le temps ajustées et de consommations d'énergie des radiateurs ou refroidisseurs électriques ajustées dans le temps.

13. Procédé selon la revendication 12, comprenant en outre l'utilisation de la quantité totale déterminée d'énergie pour mettre en marche ou arrêter au moins une centrale électrique (102) du réseau de distribution d'électricité.
